# EUROPÄISCHE PATENTANMELDUNG

(11) **EP 1 398 440 A2**
(43) Veröffentlichungstag der Anmeldung: **17.03.2004**
(21) Anmeldenummer: 03020930.8
(22) Anmeldetag: 16.09.2003
(51) Int. Cl.: E05D 5/12, E05D 11/10

(54) **Türscharnier für Kraftfahrzeuge mit einem Türfeststeller**

(30) Priorität: 16.09.2002 DE 20214356 U
(71) Anmelder: ISE Innomotive Systems Europe GmbH, 51702 Bergneustadt (DE); ISE Industries Hainichen GmbH, 09661 Hainichen (DE)
(72) Erfinder: Krumbiegel, Ulrich, 09661 Tiefenbach (DE); Löwen, Jakob, 51467 Gummersbach (DE); Adam, Günter, 04720 Zschaitz-Ottewig OT Ottewig (DE)
(74) Vertreter: Patentanwälte Wenzel & Kalkoff

(57) **Zusammenfassung**

Zur Herstellung eines Türscharniers für Kraftfahrzeuge mit einem Türfeststeller, bestehend aus einer Säulenkonsole und einer Türkonsole, die mittels eines Scharnierzapfens (1) drehgelenkig miteinander verbunden sind, wobei der Türfeststeller ein einer der Konsolen zugeordnetes Rastelement umfasst, das beim Öffnen oder Schließen der Tür zum Feststellen derselben in einer Rastposition mit mindestens einer Rastaufnahme zusammenwirkt, die im Bereich des Scharnierzapfens (1) als Scheibe (2) ausgebildet und an einem Endabschnitt (3) des Scharnierzapfens (1) befestigt ist, wobei der Endabschnitt (3) des Scharnierzapfens (1) ein vieleckiges Außenprofil (7) aufweist und in eine Öffnung (9) der Scheibe (2) greift, ist zur Herstellung einer hochfesten Verbindung zwischen dem Scharnierzapfen (1) und der Scheibe (2) vorgesehen, daß
- der Endabschnitt (3) des Scharnierzapfens (1) an seiner Stirnseite (13) eine Ausnehmung (10) aufweist und
- radial und axial derart verformt ist, dass sein Außenprofil (7) gegen die Innenwandung (8) der Öffnung (9) gepresst und
- ein relativ zur Öffnung (9) vorstehender Teil (12) des Endabschnitts (3) entweder unmittelbar oder mittelbar über ein Zwischenbauelement wie z.B. einen Ring oder eine Platte gegen die äußere Stirnfläche (6) der Scheibe (2) neben der Öffnung (9) gedrückt ist.

## Beschreibung

Die Erfindung betrifft ein Türscharnier für Kraftfahrzeuge mit einem Türfeststeller, bestehend aus einer Säulenkonsole und einer Türkonsole, die mittels eines Scharnierzapfens drehgelenkig miteinander verbunden sind, wobei der Türfeststeller ein einer der Konsolen zugeordnetes Rastelement umfasst, das beim Öffnen oder Schließen der Tür zum Feststellen derselben in einer Rastposition mit mindestens einer Rastaufnahme zusammenwirkt, die im Bereich des Scharnierzapfens als Scheibe ausgebildet und an einem Endabschnitt des Scharnierzapfens befestigt ist, wobei der Endabschnitt des Scharnierzapfens ein vieleckiges Außenprofil aufweist und in eine Öffnung der Scheibe greift. Die Erfindung bezieht sich auch auf ein Verfahren zum Befestigen einer Scheibe an einem Scharnierzapfen eines solchen Türscharniers für Kraftfahrzeuge und auf ein Formwerkzeug zur Durchführung des vorerwähnten Verfahrens.

Ein Türscharnier der vorstehenden Art ist aus der Druckschrift DE 198 11108 A1 bekannt. Der Türfeststeller umfasst als Rastelement ein Federelement, das in Vertiefungen eines Rastprofils einer Rastaufnahme einrasten kann, die als Scheibe ausgebildet ist. Der Scharnierzapfen ist in diesem Fall mit der Türkonsole fest verbunden. An seinem unteren Ende ist der Scharnierzapfen drehfest an der vorgenannten Scheibe befestigt.

Diese Befestigung des Scharnierzapfens an der Scheibe ist sehr hohen Beanspruchungen ausgesetzt, damit ausreichend hohe Haltekräfte zum Festhalten der Tür in vorbestimmten Raststellungen erreicht werden. Für die Verbindung mit der Scheibe weist der Scharnierzapfen an seinem unteren Endabschnitt ein sechseckiges Verbindungsstück auf, das in eine entsprechend sechseckig ausgebildete Öffnung der Scheibe eingreift. Auf den mehreckigen Endabschnitt des Scharnierzapfens wird zusammen mit der Scheibe eine Montagestütze zur drehfesten Momentenübertragung aufgeschoben. Zwischen der Montagestütze und der Scheibe sind der Anzahl der gewünschten Raststellungen entsprechend viele Rastrollen angeordnet, zwischen die das freie Ende des Federelementes federnd eingreift. Unterhalb der Montagestütze läuft der Scharnierzapfen bei deutlicher Querschnittsabnahme in einen Nietbolzen aus. Damit wird die gesamte Anordnung, wenn die genannten Bauteile ineinandergesteckt sind, über eine einzige Befestigung durch Vernietung des Nietbolzens in einem einzigen Arbeitsschritt in ihrer Lage fixiert. Die Vernietung kann bei Bedarf auch durch eine Verschraubung ersetzt werden. In jedem Fall wird die Aufnahmeöffnung in der Scheibe und in der Montagestütze durch eine Platte zur Lagesicherung abgedeckt.

Auf die Verbindung zwischen der Scheibe und dem Scharnierzapfen kommen beim Öffnen und Schließen der Tür hohe Drehmomente sowie vor allem Querkräfte bzw. Kraftkomponenten zur Einwirkung. Die Zahl der Lastspiele, denen die Verbindung im Laufe der Lebensdauer des Scharniers unterworfen ist, ist erheblich.

Deshalb ist eine passgenaue formschlüssige Verbindung zwischen dem im Querschnitt sechseckigen Endabschnitt des Scharnierzapfens und den jeweils mit einem entsprechenden Profil versehenen Öffnungen der Scheibe und auch der Montagestütze sowie gegebenenfalls zusätzlich der Abdeckscheibe erforderlich. Dennoch bleibt die Verbindung zwischen der Scheibe und dem Endabschnitt des Scharnierzapfens wegen der im robusten Betrieb eines Kraftfahrzeugscharniers auftretenden Beanspruchungen insbesondere bei ungewöhnlich hoher Lastwechselzahl eine Schwachstelle dieses Scharniertyps.

Der Erfindung liegt deshalb die Aufgabe zugrunde, ein Türscharnier für Kraftfahrzeuge mit einem Türfeststeller der eingangs genannten Art mit einer hochfesten Verbindung zwischen dem Scharnierzapfen und der Scheibe des Türfeststellers zu schaffen, wobei neben einem Höchstmaß an Belastbarkeit durch hohe Drehmomente und anderweitige mechanische Beanspruchungen eine einfache Montage verlangt wird. Die gleiche Aufgabe stellt sich für das erfindungsgemäße Verfahren.

Die Lösung dieser Aufgabe gemäß der Erfindung ist - ausgehend von dem eingangs beschriebenen Türscharnier - dadurch gekennzeichnet, dass
- der Endabschnitt des Scharnierzapfens an seiner Stirnseite eine Ausnehmung aufweist und
- radial und axial derart verformt ist, dass sein Außenprofil gegen die Innenwandung der Öffnung gepresst und
- ein relativ zur Öffnung vorstehender Teil des Endabschnitts entweder unmittelbar oder mittelbar über ein Zwischenbauelement wie z.B. einen Ring oder eine Platte gegen die äußere Stirnfläche der Scheibe neben der Öffnung gedrückt ist.

Kern der Erfindung ist das Prinzip der Bildung einer Ausnehmung in der Stirnseite des Endabschnittes des Scharnierzapfens, um eine gezielte Materialverdrängung der Wandung zwischen der Ausnehmung in dem Scharnierzapfen und insbesondere der Außenseite des Endabschnitts von innen nach außen und in axialer Richtung bis zur Anlage des vorstehenden Teils an der äußeren Stirnfläche der Scheibe zu erreichen. Auf diese Weise wird der formschlüssigen Verbindung zwischen dem Scharnierzapfen und der Scheibe mittels eines vieleckigen Profils, z. B. eines sechseckigen Profils eine zusätzliche form- und kraftschlüssige Befestigung durch Materialverdrängung hinzugefügt. Damit wird eine sehr hohe Festigkeit der Verbindung zwischen Scheibe und Scharnierzapfen erreicht, so daß z. B. Stoßbeanspruchungen aufgefangen und nicht auf eine nur formschlüssige Vieleckprofilverbindung im Sinne einer Lockung derselben übertragen werden.

Für die Herstellung der Verbindung ist nur ein einziger Arbeitsgang ohne zusätzliche Bauteile wie z. B. ein axial vernietetes Scheibenelement erforderlich. Umgekehrt läßt die Erfindung aber ohne weiteres auch die gleichzeitige sichere Befestigung von zusätzlichen Zwischenbauelementen wie z. B. einer Montagestütze für Rastrollen zu.

Erfindungsgemäß wird der Endabschnitt des Scharnierzapfens im Bereich der Aufnehmung axial und insbesondere radial verformt und so gegen die Flächen des Innenprofils der Öffnung der Scheibe gepreßt. Insbesondere durch die radiale Verformung werden etwa vorhandene und für die Montage durchaus sinnvolle sowie technologisch notwendige Toleranzen (Maß-, Form- und Lagetoleranzen) von Scheibe und Scharnierzapfen ausgeglichen und jegliches Spiel beseitigt, weil der gesamte Verbindungsbereich von der Umformung der Wandung des Endabschnitts des Scharnierzapfens und damit von der zusätzlichen Befestigung im vollen Umfang erfaßt wird. Sowohl bei der Serienfertigung als auch während der Lebensdauer des Scharniers fallen somit Schwankungen in der Beständigkeit bzw. Festigkeit der Verbindung zwischen Scheibe und Scharnierzapfen weg. Es bleibt bei einem einzigen Arbeitsgang ohne zusätzliche Befestigungsteile.

Es bedarf keiner besondere Hervorhebung, daß die erfindungsgemäße Lösung und ihre Vorteile ohne jede Einschränkung auf das Kraftfahrzeugscharnier gemäß DE 198 11 108 A1 anzuwenden sind. Allerdings gelten sie ebenso für alle anderen Scharnierarten, wo am Ende des Scharnierzapfens eine Scheibe oder ein ähnliches Bauteil zu befestigen ist, wobei die Verbindung zwischen diesem Bauteil und dem Scharnierzapfen vergleichbaren Beanspruchungen ausgesetzt ist.

Vorzugsweise wird der Endbereich des vorstehenden Teils der Wandung des Endabschnitts flanschringförmig geformt (Anspruch 2), damit sich eine möglichst breite Auflage und Abstützung des Endabschnitts des Scharnierzapfens an der Scheibe ergibt.

Sehr wesentlich für die Vorteilhaftigkeit des erfindungsgemäßen Türscharniers ist auch die Tatsache, daß die erfindungsgemäße Verbindung trotz überlegener Festigkeit gegenüber herkömmlichen Verbindungsarten nur einen geringen Raum beansprucht - bspw. im Vergleich zu einer Schraubbefestigung mittels Mutter, Unterlegscheibe und Verdrehsicherung.

In der Regel genügt, daß die Ausnehmung in der Stirnseite des Scharnierzapfens kürzer als deren Endabschnitt ausgebildet wird. Damit erreicht man, daß ein erheblicher Teil des Endabschnitts weiterhin mit vollem Querschnitt für die Übertragung der Drehmomente zur Verfügung steht und dennoch durch die Materialverformung in dem endseitigen Teil des Endabschnitts die vorstehend beschriebene Zunahme der form- und kraftschlüssigen Verbindung zwischen der Stange und der Scheibe erreicht wird.

Für die axiale Positionierung der Scheibe auf dem Endabschnitt des Scharnierzapfens ist es vorteilhaft, wenn der profilierte Endabschnitt des Scharnierzapfens als Sitz der Scheibe durch einen Anschlag von den übrigen Bereichen des Scharnierzapfens abgegrenzt wird, gegen den die Scheibe beim Herstellen der Befestigung angelegt wird (Anspruch 4). Auf diese Weise steht auch ohne weitere Bearbeitungsvorrichtungen ein Anschlag zur Verfügung, wenn die axialen Verformungskräfte für die gezielte Materialverdrängung im Bereich der Ausnehmung des Scharnierzapfens zur Wirkung gelangen. Der Anschlag kann aus einem einfachen Absatz an dem Scharnierzapfen dort bestehen, wo der Endabschnitt beginnt. Im übrigen ist der Absatz auch wesentlich für die Länge des überstehenden Teils des Scharnierzapfens, der verformt wird.

Vorzugsweise wird die Ausnehmung in der Stirnseite des Scharnierzapfens als zentrale koaxiale Bohrung gebildet, damit die Materialverdrängung bei der Verformung des Endabschnitts im Bereich der Ausnehmung in radialer Richtung möglichst gleichmäßig verläuft (Anspruch 3).

Für die Außen- und Innenprofile des Scharnierzapfens und der Öffnung in der Scheibe kommen nicht nur vier-, sechs- oder achteckige Profile in Betracht sondern auch Profilformen wie Vielzahn-, Kerbverzahnungs-, Torxprofile oder dergleichen. Wesentlich ist die grundsätzliche formschlüssige Verbindung zwischen dem Scharnierzapfen und der Scheibe, die durch die mit gezielter Materialverdrängung im Endabschnitt des Scharnierzapfens von innen nach außen und in axialer Richtung erreichten zusätzlichen Befestigungskräfte in radialer und axialer Richtung unterstützt und ergänzt wird, um eine vollflächige und spielfreie Verbindung zwischen der Scheibe und dem Scharnierzapfen zu erhalten zwecks Übertragung hoher radialer und axialer Kräfte sowie vor allem Drehmomente.

Für die Profilausbildung wird vorgezogen, daß das vieleckige Außenprofil des Endabschnitts des Scharnierzapfens als Vielzahnprofil ausgebildet ist, das entweder mit einem entsprechend vielzähnigen Innenprofil der Öffnung oder mit einer glattflächigen Wandung der Öffnung in Eingriff steht (Anspruch 5). Das Vielzahnprofil erleichtert die Ausrichtung der Scheibe gegenüber dem Scharnierzapfen bei der Montage. Allerdings ist auch durch eine entsprechende Bemessung der Durchmesser der Scheibenöffnung und des Endabschnitts des Scharnierzapfens darauf zu achten, daß sich eine enge Anlage bzw. Preßpassung der beiden ineinandergreifenden Bauteile ergibt, damit die kraftübertragenden Zahnflächen möglichst vollständig in Eingriff kommen.

Für die Auswahl einer Paarung eines Vielzahnprofils am Endabschnitt des Scharnierzapfens mit einer glattflächigen Wandung der Öffnung der Scheibe ist zweckmäßig, daß der vielzähnige Abschnitt des Scharnierzapfens mindestens an der Profiloberfläche einen höheren Härtegrad und einen größeren Durchmesser als die Wandung der Öffnung aufweist, so daß beim Eintreiben des Endabschnitts des Scharnierzapfens in die Öffnung ein Formschluß entsteht, bei dem das vielzähnige Profil des Endabschnitts des Scharnierzapfens in das Material der Wandung der Öffnung eindringt. Hier wird folglich der Formschluß zwischen dem Innenprofil der Öffnung der Scheibe und dem vielzähnigen Außenprofil des Endabschnitts des Scharnierzapfens unmittelbar beim Eintreiben des Scharnierzapfens in die Öffnung der Scheibe herbeigeführt. Es versteht sich von selbst, daß dieser Formschluß besonders innig ist, weil es aufgrund seiner Entstehung kein Spiel zwischen den so gebildeten vielzähnigen Profilen geben kann.

Damit der vielzähnige Endabschnitt des Scharnierzapfens als Profil bildendes Werkzeug beim Eintreiben des Scharnierzapfens in die Öffnung der Scheibe wirken kann, weist der Endabschnitt mindestens an seiner Profiloberfläche einen höheren Härtegrad als die Scheibe im Bereich ihrer Öffnung auf. Auch der Durchmesser des Endabschnitts des Scharnierzapfens ist um das Maß größer als der Durchmesser der glattflächigen Wandung der Öffnung der Scheibe, um das das Vielzahnprofil des Endabschnitts in die Wandung der Öffnung der Scheibe eindringen soll.

Möglich ist auch, daß die Scheibe mindestens im Bereich ihrer Öffnung ebenfalls oberflächengehärtet bzw. hartstoffbeschichtet (z. B. PVD-Verfahren) ist und der Endabschnitt des Scharnierzapfens gleichfalls eine Härtung bzw. Vergütung mindestens im Bereich seiner Profiloberfläche aufweist, wobei unterschiedliche Härtegrade anzuwenden sind, damit der vielzähnige Endabschnitt des Scharnierzapfens als Werkzeug wirken, also beim Eintreiben in die Öffnung in das Material der Wandung der Öffnung eindringen kann.

Die vorstehende Kombination zwischen Profilformschluß und Ausübung radialer Kräfte von dem vielzähnig profilierten Endabschnitt des Scharnierzapfens läßt sich auch ohne Hohl- bzw. Taumelvernietung - also ohne Ausbildung einer Ausnehmung im Endabschnitt des Scharnierzapfens von dessen Stirnfläche her mit Verdrängung und Verformung des Materials der Wandung des Endabschnitts zwischen der Ausnehmung und dem Vielzahnprofil des Endabschnitts - verwirklichen, indem man einen vielzähnigen und ausreichend lang bemessenen Endabschnitt des Scharnierzapfens ohne solche Ausnehmung in die Öffnung der Scheibe eintreibt bis zum Anschlag. Dann steht ein ausreichend lang bemessener Teil des Endabschnitts des Scharnierzapfens über die Stirnfläche der Scheibe vor, damit die notwendige axiale Verbindung und Sicherung zwischen dem Scharnierzapfen und der Scheibe vorzugsweise durch Ausformen eines Nietkopfes am Ende des Endabschnitts des Scharnierzapfens herbeigeführt wird. Hierbei kann - wie im übrigen bei jeder der vorstehend beschriebenen Ausführungsformen - der Endabschnitt des Scharnierzapfens in einen profilschneidenden Abschnitt und in einen Schaft, der sich mit kleinerem Durchschnitt an den profilbildenden Teil anschließt, unterteilt sein. Dabei erstreckt sich der profilbildende Teil mindestens über einen erheblichen Teil der Wandung der Öffnung der Scheibe, damit eine hochwirksame Drehmomente und insbesondere radiale Kräfte übertragende Verbindung zwischen den beiden Bauteilen herbeigeführt wird. Zur Erleichtung der Montage weist der Endabschnitt oder jedenfalls dessen profilbildender Teil zweckmäßig jeweils eine Phase zum leichteren Einführen in die Öffnung der Scheibe auf.

Zwischen dem Niet - unabhängig davon, ob es sich um einen wulstförmigen Ring wie im Falle der Hohlvernietung oder um einen Nietkopf am Ende des Bolzenabschnitts des Scharnierzapfens handelt - und der Scheibe kann eine Platte oder Unterlegscheibe oder dergleichen zur Vergrößerung der Abstützfläche des Niets an der äußeren Stirnfläche der Scheibe neben der Öffnung angeordnet sein. Es versteht sich von selbst, daß für diese Ausführungsform auch die vorstehenden Ausführungen über eine Härtung bzw. Vergütung der miteinander in Eingriff kommenden Bauteile mindestens an deren Oberfläche gelten. Im übrigen ist eine Härtung oder Vergütung z. B. auch durch Auftragen von Hartschichten auch im Bereich der Rastaufnahme, die an der Scheibe ausgebildet oder mit dieser verbunden ist, zweckmäßig, wo die Rastaufnahme mit dem ihr zugeordneten Rastelement in Eingriff steht.

Das Prinzip der Ausformung eines Innenprofils in der Öffnung der Scheibe mit dem außenprofilierten Endabschnitt des Scharnierzapfens als Werkzeug läßt sich auch umkehren. Hierfür erhält die Wandung der Öffnung der Scheibe ein vielzähniges Innenprofil, während der Endabschnitt des Scharnierzapfens außen glattflächig gestaltet ist. Bei entsprechender Bemessung des Innendurchmessers des vielzähnigen Innenprofils der Öffnung der Scheibe und dem Außendurchmesser des zylindrischen Endabschnitts des Scharnierzapfens kann das Außenprofil an der Außenfläche des Endabschnitts des Scharnierzapfens beim Eintreiben des Scharnierzapfens in die Öffnung der Scheibe hergestellt werden, wobei das vielzähnige Innenprofil der Wandung der Öffnung der Scheibe als Werkzeug dient. Hierfür muß das Verhältnis der Härtegrade umgekehrt werden, d. h. das vielzähnige Innenprofil der Öffnung der Scheibe muß wenigstens an der Oberfläche einen größeren Härtegrad aufweisen als die Außenseite des Endabschnitts des Scharnierzapfens. Wenn eine Härtung des Innenprofils der Öffnung der Scheibe vorgenommen wird, kann dies vorteilhafterweise auch im Abwälzbereich der Rastierung der Scheibe im Bereich des Türfeststellers erfolgen, wo ein Rastelement z. B. eine Feder mit einer Rastaufnahme z. B. einem Rastierungsprofil unter Federdruck zusammenwirkt. Je nach Bedarfsfall läßt sich dabei die Härtung gleichzeitig oder nacheinander im Bereich der Rastaufnahme und im Bereich der Innenverzahnung der Öffnung der Scheibe vornehmen.

Die vorstehenden Ausführungsformen, wobei der vielzähnige Profilabschnitt des Scharnierzapfens als Werkzeug zur Herstellung eines entsprechenden Innenprofils an der Wandung der Öffnung der Scheibe oder aber die Scheibe mit ihrem vielzähnigen Innenprofil als Werkzeug zur Herstellung eines entsprechenden Außenprofils an dem Endabschnitt des Scharnierzapfens beim Eintreiben des Scharnierzapfens in die Öffnung der Scheibe benutzt wird, sind eigenständige unabhängige Erfindungen. Dies gilt auch für die Erfindung der entsprechenden Nietausformung für diese Ausführungsformen des Scharniers sowie für das Verfahren und für die so hergestellte Verbindung.

Grundsätzlich ist auch möglich, Material der Scheibe im Verbindungsbereich zwischen dem Scharnierzapfen und der Scheibe insbesondere in radialer Richtung auf den Endabschnitt des Scharnierzapfens hin zu verdrängen z.B. durch radiales und auch axiales Stauchen von außen her. Diese Lösung wird von der Erfindung miterfasst und lässt sich beispielsweise dadurch verwirklichen, dass auf eine Ausnehmung an der Stirnseite des Scharnierzapfens verzichtet und stattdessen eine kreisförmige Nut mit größerem Durchmesser als den Außendurchmesser des Endabschnitts des Scharnierzapfens an der äußeren Stirnfläche der Scheibe oder anstelle der Nut ein Vorsprung z.B. von Nabenform an der Scheibe ausgebildet bzw. angelegt wird. Aus dem Ringbereich zwischen der Nut und dem Endabschnitt des Scharnierzapfens wird Material radial und axial so verformt, dass sich schließlich eine innige kraft- und formschlüssige Verbindung zwischen der Scheibe und dem Scharnierzapfen an den Profileingriffsflächen und zusätzlich eine Verdrängung von Material aus der Scheibe bis vor die Stirnfläche des Scharnierzapfens ergibt. So würde wieder eine wulstförmige oder flanschringförmige Ausbildung von Material erfolgen. Einfacher ist in diesem Fall allerdings die Verwendung eines Endabschnitts des Scharnierzapfens, der kürzer als die Dicke der Scheibe im Verbindungsbereich ist, so dass die radial nach innen gerichtete Materialverdrängung von der Scheibe zu dem Rücksprung hin erfolgt, der durch die Verkürzung des Endabschnitts der Stange entsteht. Im Falle der Verwendung eines z.B. nabenförmigen Vorsprungs an der Scheibe geben sich ohne weiteres entsprechende Möglichkeiten für eine Verformung mit Materialverdrängung durch Aufbringen entsprechender Kräfte auf die Außenfläche des Vorsprungs und zusätzlich gegebenenfalls auf den von dem Vorsprung vorstehenden Teil des Endabschnitts des Scharnierzapfens.

Das erfindungsgemäße Verfahren zum Befestigen einer Scheibe an einem Scharnierzapfen eines Türscharniers für Kraftfahrzeuge bezieht sich auf ein Türscharnier der eingangs genannten Art, nämlich auf ein Türscharnier mit einem Türfeststeller. Das erfindungsgemäße Verfahren ist dadurch gekennzeichnet, dass
- von der Stirnseite des Endabschnittes des Scharnierzapfens her eine Ausnehmung in dem Scharnierzapfen gebildet wird,
- der Endabschnitt des Scharnierzapfens so bemessen und
- die Scheibe so auf den Endabschnitt des Scharnierzapfens aufgesetzt wird, dass der Endabschnitt mit einem überstehenden Teil von der Scheibe vorsteht,
- und der Endabschnitt, jedenfalls dessen Wandung zwischen der Ausnehmung und dem Außenprofil, mit einem Formwerkzeug unter Druck in radialer und axialer Richtung derart verformt wird, dass das Außenprofil des Endabschnitts gegen die Innenwandung der Öffnung und der überstehende Teil des Endabschnitts des Schamierzapfens entweder unmittelbar oder mittelbar über ein Zwischenbauelement wie z. B. über einen Ring oder eine Platte gegen die äußere Stirnfläche der Scheibe neben der Öffnung gepresst wird (Anspruch 7).

Dieses Verfahren zeichnet sich vor allem dadurch aus, dass es eine Herstellung einer hochwirksamen Verbindung zwischen der Scheibe und dem Scharnierzapfen, wie sie vorstehend im Zusammenhang mit der Erläuterung des erfindungsgemäßen Türscharniers beschrieben ist, in einem einzigen Verfahrensschritt zulässt, durch den die für die Verbindung vorbereiteten Bauteile, nämlich die Scheibe und der Scharnierzapfen, durch Verdrängung und/oder Verformung von Material sowohl im Profileingriffsbereich als auch am Ende des Scharnierzapfens praktisch unlösbar miteinander verbunden werden. Die Vorbereitung der beiden Bauteile für die Anwendung des Verfahrens ist offenkundig einfach. Vor allem entfällt die bisher unerlässliche Präzision für den formschlüssigen Eingriff der beiderseitigen Profile der Bauteile, wenn das Außenprofil des Endabschnitts des Scharnierzapfens und das Innenprofil der Wandung der Öffnung der Scheibe vor dem Eingriff dieser Bauteile stattfindet. Zur Vermeidung von Wiederholungen wird im übrigen auf die vorstehenden Erläuterungen des erfindungsgemäßen Türscharniers Bezug genommen, soweit sie unmittelbar oder mittelbar auch für das erfindungsgemäße Verfahren gelten.

Weiterbildungen des erfindungsgemäßen Verfahrens sind in den Ansprüchen 8-11 angegeben, deren Vorteile sich aus den entsprechenden Weiterbildungen des erfindungsgemäßen Verfahrens ergeben und deshalb hier nicht noch einmal angeführt werden.

Die Erfindung schließt auch ein Formwerkzeug zur Verwendung bei der Durchführung des vorstehend angegebenen Verfahrens zwecks Herstellung eines erfindungsgemäßen Türscharniers ein. Dieses Formwerkzeug zeigt sich dadurch aus, dass am Ende eines Schaftes ein vorstehender Stempel ausgebildet ist, dessen Wandung in eine dem Stempel umgebende kreisringförmige Nut übergeht. Der Stempel dringt bei der Durchführung des Verfahrens in die in dem Verschlusszapfen gebildete Ausnehmung ein, während die Nut den überstehenden Teil des Endabschnitts des Scharnierzapfens, nämlich dessen Wandung zwischen der Ausnehmung und der Außenseite des überstehenden Teils, erfasst und flanschringförmig verformt, wenn das Formwerkzeug auf den Endabschnitt des Verschlusszapfens gedrückt wird. Dabei verläuft die Nut im Querschnitt vorzugsweise bogenförmig, damit der gebildete Flanschring eine im Querschnitt entsprechend konvexe Kontur erhält. Dieses Formwerkzeug findet bevorzugt Verwendung bei dem oben angegebenen erfindungsgemäßen Verfahren, um eine entsprechende Verformung der miteinander zu verbindenden Bauteile in einem Schritt zu erreichen.

Es versteht sich von selbst, dass bei der Herstellung des Innenprofils der Wandung der Öffnung der Scheibe erst unmittelbar beim Eintreiben des Scharnierzapfens in die Öffnung, wenn also der profilierte, nämlich vorzugsweise vielzähnige Endabschnitt des Scharnierzapfens gleichzeitig das Formwerkzeug bildet, das vorstehend angegebene erfindungsgemäße Verfahren ebenso wie das erfindungsgemäße Formwerkzeug entsprechend abzuwandeln ist. Weil diese abweichende Ausführungsform vorstehend bereits eingehend erläutert worden ist, wird an dieser Stelle auf eine Wiederholung verzichtet. Diese Verfahrensvariante bedient sich folglich der Anwendung von zwei Schritten beim Herstellen der Verbindung zwischen der Scheibe und dem Scharnierzapfen. Denn im ersten Schritt wird mit dem vielzähnigen Teil des Endabschnitts des Scharnierzapfens das entsprechende Innenprofil in die glattflächige Wandung der Öffnung geschnitten und dabei gleichzeitig eine form- und materialschlüssige Verbindung zwischen diesen beiden Bauteilen hergestellt. Und in einem zweiten Schritt wird durch eine der angegebenen Vernietungsvarianten die erforderliche axiale Verbindung und Sicherung zwischen der Scheibe und dem Scharnierzapfens hergestellt. In diesem Fall würde das Formwerkzeug entsprechend angepasst, wobei insbesondere der vorstehende Stempel entfällt, die kreisringförmige Nut, die vorzugsweise im Querschnitt bogenförmig verläuft, jedoch beibehalten werden kann, wenn - als Alternative - kein linsenkopfförmiger Niet an das Ende des Scharnierzapfens angeformt wird.

Die Erfindung wird nachstehend anhand von Ausführungsbeispielen näher erläutert. In den Zeichnungen zeigen:
- Fig. 1: ein bekanntes Türscharnier für Kraftfahrzeuge in perspektivischer Ansicht zur Verdeutlichung der Anordnung einer Verbindung zwischen einer hier als Mitnehmerplatte wirkenden Scheibe und einem Scharnierzapfen;
- Fig. 2: eine Schnittansicht des bekannten Türscharniers als Ergänzung zu Fig. 1;
- Fig. 3: eine Querschnittsansicht eines Teils eines in eine Öffnung einer Scheibe eingesetzten Scharnierzapfens vor einer Verformung des Endabschnitts des Scharnierzapfens;
- Fig. 4: eine Querschnittsansicht des Scharnierzapfens und der Scheibe von Fig. 1, jedoch nach der Verformung des Endabschnitts des Scharnierzapfens;
- Fig. 5: eine schematische Schnittdarstellung eines Formwerkzeugs, das zur Herstellung der in Fig. 3 und 4 veranschaulichten Verbindung verwendet werden kann, mit gleichzeitiger Schnittdarstellung des verformten Endabschnitts des Scharnierzapfens;
- Fig. 6: eine Schnittdarstellung einer Variante zu Fig. 3 und 4, bei der ein mit einem vielzähnigen Endabschnitt ausgestatteter Scharnierzapfen vor der Einführung in eine Öffnung einer Scheibe mit glattflächiger Wandung steht;
- Fig. 7: eine Schnittdarstellung einer abgewandelten Ausführung des Scharnierzapfens von Fig. 6 nach Herstellung der Verbindung zwischen der Scheibe und dem Scharnierzapfen.

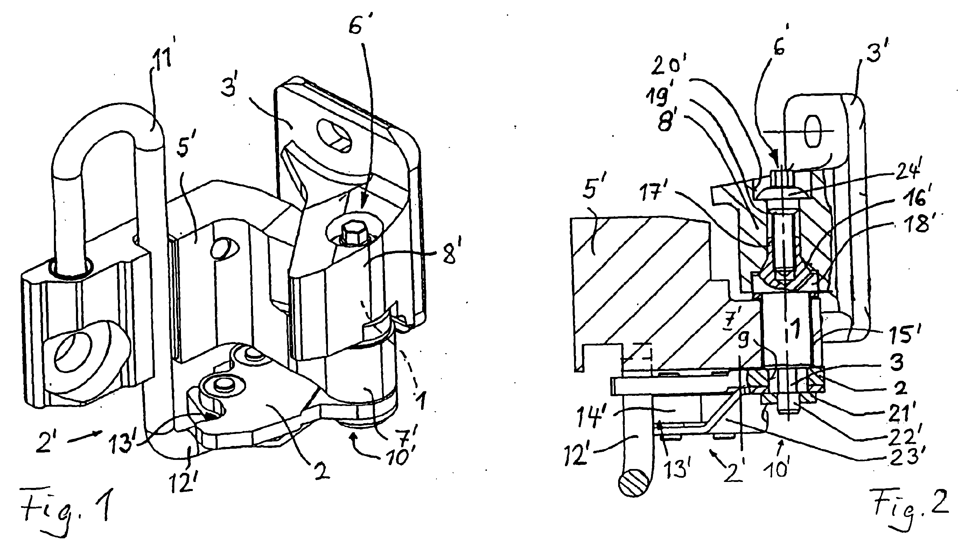

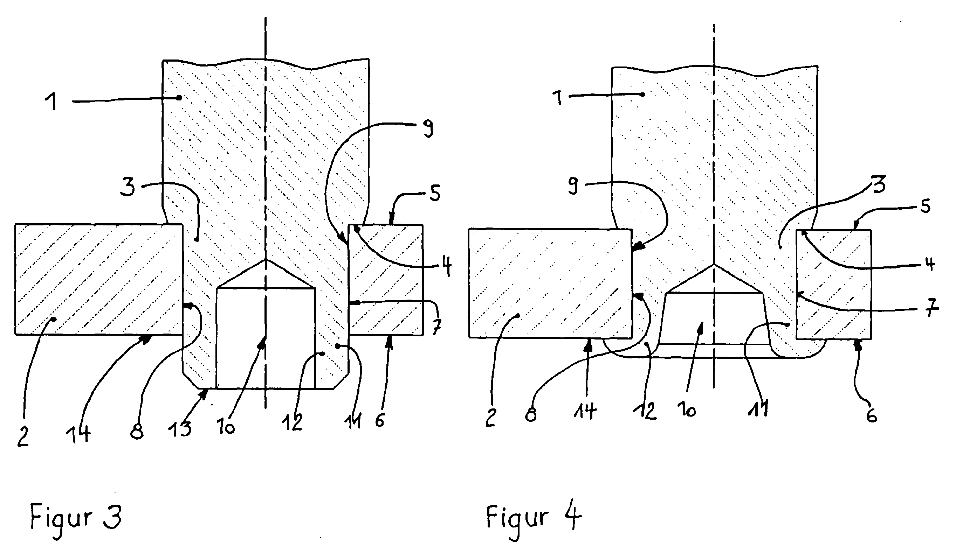

In Fig. 1 und 2 ist zum besseren Verständnis der Darstellungen von Fig. 3-7 ein typisches bekanntes Türscharnier von Kraftfahrzeugen mit einem Feststeller 2' dargestellt. Eine Säulenkonsole 5' ist mit einer Türkonsole 3' mittels eines Scharnierzapfens 1 drehgelenkig verbunden. Dieser ist mittels einer Lagerbuchse 15' im Scharnierauge 7' der Säulenkonsole 5' drehgelenkig gelagert und im Scharnierauge 8' der Türkonsole 3' mittels einer axialen Verschraubung 6' und einer Nietverbindung 10' sowie einem vor allem Drehmomente übertragenden Absatz 18' befestigt. Zu der Lagerung und zu der axialen Verschraubung des Scharnierzapfens 1 im Scharnierauge 8' gehört noch ein konischer Abschnitt 16', ein zylindrischer Abschnitt 17', ein konischer Abschnitt 19' und ein Schraubenkopf 24' des Scharnierzapfens 1 und eine zylindrische Ausnehmung 20' im Scharnierauge 8'.

Der Türfeststeller 2' umfasst ein an der Säulenkonsole 5' befestigtes Federelement 11', das mit seinem freien Ende 12' als Rastelement unter Federdruck mit einer Rastaufnahme 13' beim Öffnen und Schließen der Tür des Kraftfahrzeuges zusammenwirkt. Die Rastaufnahme 13' ist in Form einer Scheibe 2 als Mitnehmerplatte drehfest mit dem Scharnierzapfen 1 verbunden. Hierfür greift ein im Querschnitt sechseckiger Endabschnitt 3 des Scharnierzapfens 2 in eine entsprechend sechskantig ausgebildete Öffnung 9 der Scheibe 2. Die Nietverbindung 10' erfolgt mit einem Nietbolzen 22' unter Zwischenschaltung einer Unterlegscheibe 21'und einer Montagestütze 23' zur Aufnahme von Rollen 14' der Rastaufnahme 13' zwischen der Scheibe 2 als Mitnehmerplatte und der Montagestütze 23'.

Wenn beim Öffnen oder Schließen der Tür des Kraftfahrzeugs die am Schamierzapfen 1 die befestigte Scheibe 2 als Mitnehmerplatte mit der Türkonsole 3' verschwenkt wird, gleitet das freie Ende 12' des Federelementes 11' entweder unmittelbar über die Vertiefungen und Vorsprünge des Profils der Rastaufnahme 13' oder entlang der Rollen 14', wenn diese die Rastaufnahme 13' bilden. In jedem Fall wird die Verbindung zwischen dem Schamierzapfen 1 und der Scheibe 2 im Bereich des Endabschnitts 3 des Scharnierzapfens 1 und der Öffnung 9 der Scheibe 2 erheblichen stoßartig auftretenden Drehmomenten sowie axialen und radialen Kräften unterworfen, wie eingangs der Beschreibung im Einzelnen dargelegt wurde.

Fig. 3 und 4 zeigen ein erstes Ausführungsbeispiel des erfindungsgemäßen Türscharniers sowie der erfindungsgemäßen Verbindung zwischen dem Scharnierzapfens 1 und der Scheibe 2 bzw. des zur Herstellung der Verbindung dienenden Verfahrens.

In diesem Ausführungsbeispiel ist ein Endabschnitt 3 des Scharnierzapfens 1 im Querschnitt 3 mit einem sechskantigen Profil ausgestattet, und die Öffnung 9 der Scheibe 2 ist mit einem entsprechenden Innenprofil versehen. Der Scharnierzapfen 1 wird mit seinem Endabschnitt 3, wie dargestellt, in die Öffnung 9 der Scheibe 2 eingeführt, bis ein durch einen Absatz an dem Scharnierzapfen 1 ausgebildeter Anschlag 4 an einer inneren Stirnfläche 5 der Scheibe 2 anliegt. Auf diese Weise erhält ein - mit Bezug auf die Zeichnung - unten an dem Endabschnitt 3 überstehender Teil 12 eine vorbestimmte Länge, die dem Unterschied zwischen der Gesamtlänge des Endabschnitts 3 und der Dicke der Scheibe 2 entspricht.

Von der freien oder äußeren Stirnfläche 13 des Endabschnitts 3 des Scharnierzapfens 1 her erstreckt sich eine als Bohrung ausgebildete Ausnehmung 10 in der dargestellten Weise koaxial zu dem Scharnierzapfen 1 in den Endabschnitt 3 hinein, wobei allerdings die Ausnehmung 10 deutlich kürzer als der Endabschnitt 3 ist.

In der Anordnung nach Fig. 3 hat die Scheibe 2 bereits einen formschlüssigen Sitz auf dem Scharnierzapfen 1 in der darstellten Lage. Es fehlt noch eine axiale Befestigung, und, wie nach einem wesentlichen Merkmal der Erfindung vorgesehen ist, eine absolut spielfreie form- und kraftschlüssige Verbindung zwischen dem Scharnierzapfen 1 und der Scheibe 2 im Bereich der Öffnung 9 und des Randbereichs 14 dieser Öffnung.

Die Anordnung von Fig. 3 geht durch eine Materialverdrängung und Materialverformung, nämlich durch eine Verformung der Wandung 11 zwischen der Ausnehmung 10 und dem Außenprofil 7 sowie des über- bzw. vorstehenden Teils 12 des Endabschnitts 3 in den Zustand der Befestigung der Scheibe 2 an dem Scharnierzapfen 1 gemäß Fig. 4 über. Die aufgrund des Außenprofils 7 des Endabschnitts 3 des Scharnierstiftes 1 und des entsprechenden Innenprofils 8 der Öffnung 9 vorhandene Verbindung wird durch die Anpressung der Flächen und Kanten der Profile nun absolut spielfrei, und vorzugsweise im gleichen Verfahrensschritt wird der überstehende Teil 12 zur Herbeiführung einer sicheren axialen Verbindung zwischen der Scheibe 2 und dem Scharnierzapfen 1 wulstförmig verformt und gegen die äußere Stirnfläche gepreßt.

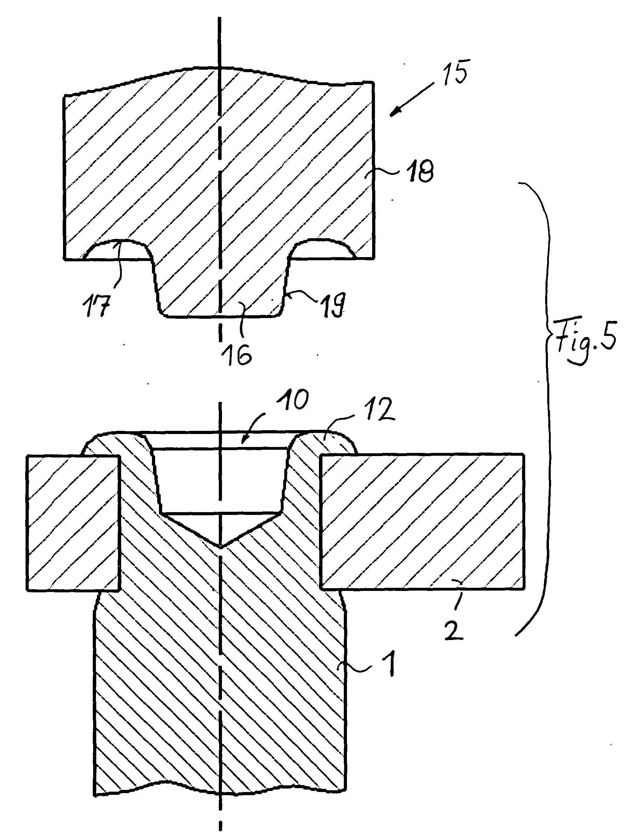

Hierfür wird ein in Fig. 5 im oberen Bereich schematisch dargestelltes Formwerkzeug 15 benutzt, mit dem der überstehende Teil 12 unter Druck in radialer und axialer Richtung verformt wird. Dabei wird der Teil 12 von dem Formwerkzeug 15 gegen die äußere Stirnfläche 6 der Scheibe 2 im äußeren Randbereich 14 der Öffnung 9 der Scheibe 2 gepreßt und erhält dabei die genannte flanschringförmige Form. Bereits durch diese Verformung wird ein hohes Maß an axialer form- und kraftschlüssiger Verbindung zwischen dem unteren Teil des Scharnierzapfens 1 und der Scheibe 2 herbeigeführt.

Vorzugsweise gleichzeitig wird jedoch auch die Wandung 11 zwischen der Ausnehmung 10 und der Öffnung 9 unter hohem Druck radial nach außen gepreßt, so daß das sechseckige Außenprofil 7 mit dem entsprechend sechseckig ausgebildeten Innenprofil eine innige kraft- und formschlüssige Verbindung eingeht. In Fig. 4 ist deutlich die sich dabei ergebende Verformung der Ausnehmung 10 zu erkennen, die eine entsprechende Verkürzung und insbesondere eine Formänderung im Innern erfährt, weil das Material der Wandung 11 axial und insbesondere radial verformt ist.

Als Werkstoffe für die Scheibe 2 und ebenso für den Scharnierzapfen 1, der kaltgeformt und/oder mechanisch bearbeitet sein kann, kommen legierte und unlegierte Bau- bzw. Vergütungsstähle in Betracht, die eine plastische Verformung zulassen.

Auch an dem dargestellten und vorstehend beschriebenen Ausführungsbeispiel wird deutlich, daß das Verbindungsverfahren und die damit herstellbare Verbindung an dem erfindungsgemäßen Türscharnier für Kraftfahrzeuge erhebliche Montagevorteile und insbesondere eine Steigerung der Beständigkeit und Festigkeit der Verbindung zwischen dem Scharnierzapfen 1 und der Scheibe 2 erreichen. Andere technische Vorteile des Verbindungsverfahrens und des damit hergestellten Scharniers sind der Beschreibungseinleitung zu entnehmen.

Das in Fig. 5 schematisch dargestellte Formwerkzeug 15 weist am Ende des Schaftes 18 einen vorstehenden Stempel 16 auf, dessen Wandung 19 in eine den Stempel 16 umgebende kreisringförmige sowie im Querschnitt bogenförmige Nut 17 übergeht. Wenn der Scharnierzapfen 1 und die Scheibe 2 zum Herstellen der Verbindung dieser Bauteile vorbereitet sind und die Scheibe 2, wie in Fig. 3 dargestellt, auf den Endabschnitt 3 des Scharnierzapfens 1 aufgesetzt ist, wird die vorbeschriebene Verformung des überstehenden Teils 12 (vgl. Fig. 4 und 5) dadurch hergestellt, daß das Formwerkzeug 15 mit koaxialer Ausrichtung gegenüber dem Scharnierzapfen 1 gegen den Endabschnitt 3 des Scharnierzapfens 1 geführt wird. Dabei dringt der stumpfkegelige Stempel 16 in die Ausnehmung 10 ein und verformt diese, während der Werkzeugteil mit der kreisförmigen Nut 17 den überstehenden Teil 12 so verformt, wie es in Fig. 5 dargestellt ist. Zur Klarstellung wird darauf hingewiesen, daß Fig. 5 das Formwerkzeug 15 und die miteinander verbundenen Bauteile, nämlich die Scheibe 2 und den Scharnierzapfen 1, nach der Herstellung der Verbindung zeigt, nämlich wenn das Formwerkzeug 15 von den miteinander verbundenen Bauteilen gelöst und zurückgezogen wird. Im übrigen wird auf die vorhergehende Beschreibung des Formungsvorgangs Bezug genommen.

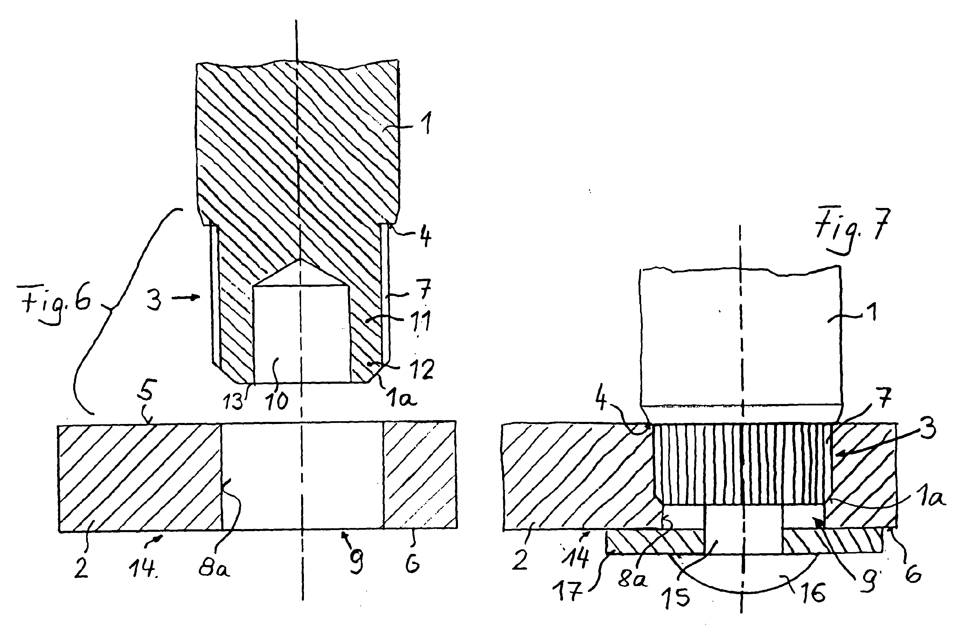

Das in Fig. 6 dargestellte Ausführungsbeispiel unterscheidet sich von dem Ausführungsbeispiel gemäß Fig. 3 und 4 vor allem dadurch, daß der Endabschnitt 3 des Scharnierzapfens 1 ein vielzähniges Außenprofil 7 aufweist, während die Wandung 8a der Öffnung 9 der Scheibe 2 als kreisförmige Bohrung glattflächig ausgebildet ist. Wie die Zeichnung zeigt, weist das vielzähnige Außenprofil 7 des Endabschnitts 3 einen größeren Durchmesser als die Öffnung 9 auf. Zum Herstellen einer hochfesten Verbindung zwischen der Scheibe 2 und dem Scharnierzapfen 1 wird der Endabschnitt 3 in die Öffnung 9 der Scheibe 2 eingetrieben. Eine Phase 1a am unteren Ende des Endabschnitts 3 des Scharnierzapfens 1 erleichtert die Einführung des Endabschnitts 3 in die Öffnung 9. Beim Eintreiben in die Öffnung 9 schneidet der Endabschnitt 3 mit seinem vielzähnigen Außenprofil 7 ein entsprechendes Innenprofil in die glattflächige Wandung 8a der Öffnung 9 der Scheibe 2. Hierfür weist das Außenprofil 7 einen höheren Härtegrad als das die Wandung 8a bildende Material der Scheibe 2 auf, jedenfalls im Oberflächenbereich der Öffnung 9. Die Verbindung zwischen der Scheibe 2 und dem Scharnierzapfen 1 ist, was diesen Verformungsvorgang anbetrifft, beendet, wenn der Anschlag 4 die innere Stirnfläche 5 der Scheibe 2 erreicht.

Anschließend erfolgt die Verformung des von der äußeren Stirnfläche 6 der Scheibe 2 vorstehenden Teils 12 des Endabschnitts 3 zu dem in Fig. 4 dargestellten flanschringartigen Niet zur Herstellung einer sicheren axialen Befestigung zwischen dem Scharnierzapfen 1 und der Scheibe 2. Dabei wird zusätzlicher Druck auf die Wandung 11 von der Ausnehmung 10 des Endabschnitts 3 des Scharnierzapfens 1 herausgeübt und die entstandene form- und materialschlüssige Verbindung zwischen dem vielzähnigen Außenprofil 7 und dem in die Wandung 8a geschnittenen Innenprofil noch weiter gefestigt.

Allerdings kommen für die Vernietung auch andere Ausführungen ohne Ausnehmung 10 in Betracht, wie aus dem nachfolgend beschriebenen Ausführungsbeispiel gemäß Fig. 7 ersichtlich wird.

Das weitere Ausführungsbeispiel nach Fig. 7 unterscheidet sich von dem Ausführungsbeispiel gemäß Fig. 6 vor allem dadurch, daß sich an das vielzähnige Profil 7 des Endabschnitts 3 des Scharnierzapfens 1 ein Schaft 15 mit kleinerem Durchmesser als dem Endabschnitt 3 anschließt. Wenn - wie im Ausführungsbeispiel gemäß Fig. 6 - der Endabschnitt 3 des Scharnierzapfens 1 mit seinem vielzähnigen Profil 7 in die glattflächige Wandung 8a der Öffnung 9 der Scheibe 2 eingetrieben und dabei ein entsprechendes Innenprofil gebildet hat, erfolgt in einem zweiten Schritt die Vernietung zwecks axialer Sicherung der Verbindung zwischen dem Scharnierzapfen 1 und der Scheibe 2. Das Ende des Schaftes 15, der vor der Herstellung der Verbindung zylinderförmig ausgebildet sein kann, wird im vorliegenden Ausführungsbeispiel zu einem linsenförmigen Nietkopf 16 geformt. Dabei wird zur Vergrößerung der Abstützungsfläche zwischen dem Nietkopf 16 und der äußeren Stirnfläche 6 der Scheibe 2 eine Unterlegscheibe 17, wie in der Zeichnung dargestellt, zwischengeschaltet.

Abweichend von der Darstellung in Fig. 7 kann sich der mit dem vielzähnigen Außenprofil 7 versehene Endabschnitt 3 des Scharnierzapfens 1 auch ohne weiteres noch weiter in die Öffnung 9 der Scheibe 2 erstrecken oder diese gänzlich ausfüllen. Es versteht sich von selbst, daß für die Vernietung zur axialen Sicherung der Verbindung zwischen dem Scharnierzapfen 1 und der Scheibe 2 auch andere Nietformen oder auch eine Gewindeverbindung mit einer Mutter in Betracht kommen, die auf ein Gewindeende des Schaftes 15 aufgeschraubt ist.

## Patentansprüche

1. Türscharnier für Kraftfahrzeuge mit einem Türfeststeller, bestehend aus einer Säulenkonsole und einer Türkonsole, die mittels eines Scharnierzapfens (1) drehgelenkig miteinander verbunden sind, wobei der Türfeststeller ein einer der Konsolen zugeordnetes Rastelement umfasst, das beim Öffnen oder Schließen der Tür zum Feststellen derselben in einer Rastposition mit mindestens einer Rastaufnahme zusammenwirkt, die im Bereich des Scharnierzapfens (1) als Scheibe (2) ausgebildet und an einem Endabschnitt (3) des Scharnierzapfens (1) befestigt ist, wobei der Endabschnitt (3) des Scharnierzapfens (1) ein vieleckiges Außenprofil (7) aufweist und in eine Öffnung (9) der Scheibe (2) greift,
**dadurch gekennzeichnet, dass**
- der Endabschnitt (3) des Scharnierzapfens (1) an seiner Stirnseite (13) eine Ausnehmung (10) aufweist und
- radial und axial derart verformt ist, dass sein Außenprofil (7) gegen die Innenwandung (8) der Öffnung (9) gepresst und
- ein relativ zur Öffnung (9) vorstehender Teil (12) des Endabschnitts (3) entweder unmittelbar oder mittelbar über ein Zwischenbauelement wie z.B. einen Ring oder eine Platte gegen die äußere Stirnfläche (6) der Scheibe (2) neben der Öffnung (9) gedrückt ist.

2. Türscharnier nach Anspruch 1, **dadurch gekennzeichnet, dass** der Endbereich des vorstehenden Teils (12) der Wandung (11) flanschringförmig geformt ist.

3. Türscharnier nach Anspruch 1 oder 2, **dadurch gekennzeichnet, dass** die Ausnehmung (10) in der Stirnseite (13) des Endabschnitts (3) eine zentrale koaxiale Bohrung im Scharnierzapfen (1) mit radialer und axialer Verformung ist.

4. Türscharnier nach einem der Ansprüche 1-3, **dadurch gekennzeichnet, dass** der Endabschnitt (3) des Scharnierzapfens (1) als Sitz der Scheibe (2) durch einen Anschlag (4) von den übrigen Bereichen des Scharnierzapfens (1) abgegrenzt ist, an dem die Scheibe (2) angelegt ist.

5. Türscharnier nach einem der Ansprüche 1-4, **dadurch gekennzeichnet, dass** das vieleckige Außenprofil (7) des Endabschnitts (3) des Scharnierzapfens (1) als Vielzahnprofil (7a) ausgebildet ist, das entweder mit einem entsprechend vielzähnigen Innenprofil der Öffnung (9) oder mit einer glattflächigen Wandung der Öffnung (9) in Eingriff steht.

6. Türscharnier nach Anspruch 5, **dadurch gekennzeichnet, dass** der vielzähnige Abschnitt (3) des Scharnierzapfens (1)mindestens an der Profiloberfläche einen höheren Härtegrad und einen größeren Durchmesser als die Wandung der Öffnung (9) aufweist, so dass beim Eintreiben des Endabschnitts (3) des Scharnierzapfens (1) in die Öffnung (9) ein Formschluss entsteht, bei dem das vielzähnige Profil des Endabschnitts (3) des Scharnierzapfens (1) in das Material der Wandung der Öffnung (9) eindringt.

7. Verfahren zum Befestigen einer Scheibe an einem Scharnierzapfen eines Türscharniers für Kraftfahrzeuge, bestehend aus einer Säulenkonsole und einer Türkonsole, die mittels des Scharnierzapfens (1) drehgelenkig miteinander verbunden sind, wobei ein Türfeststeller ein einer der Konsolen zugeordnetes Rastelement umfasst, das beim Öffnen oder Schließen der Tür zum Feststellen derselben in einer Rastposition mit mindestens einer Rastaufnahme zusammenwirkt, die im Bereich des Scharnierzapfens (1) als Scheibe (2) ausgebildet und an einem Endabschnitt (3) des Scharnierzapfens (1) befestigt ist, wobei der Endabschnitt (3) des Scharnierzapfens (1) ein vieleckiges Außenprofil (7) aufweist und in eine Öffnung der Scheibe (2) greift,
**dadurch gekennzeichnet, dass**
- von der Stirnseite (13) des Endabschnittes (3) des Scharnierzapfens (1) her eine Ausnehmung (10) in dem Scharnierzapfen (1) gebildet wird,
- der Endabschnitt (3) des Scharnierzapfens (1) so bemessen und
- die Scheibe (2) so auf den Endabschnitt (3) des Scharnierzapfens (1) aufgesetzt wird, dass der Endabschnitt (3) mit einem überstehenden Teil (12) von der Scheibe (2) vorsteht,
- und der Endabschnitt (3), jedenfalls dessen Wandung (11) zwischen der Ausnehmung (10) und dem Außenprofil (7), mit einem Formwerkzeug (15) unter Druck in radialer und axialer Richtung derart verformt wird, dass das Außenprofil (7) des Endabschnitts (3) gegen die Innenwandung (8) der Öffnung (9) und der überstehende Teil (12) des Endabschnitts (3) des Scharnierzapfens (1) entweder unmittelbar oder mittelbar über ein Zwischenbauelement wie z.B. über einen Ring oder eine Platte gegen die äußere Stirnfläche (6) der Scheibe (2) neben der Öffnung (9) gepresst wird.

8. Verfahren nach Anspruch 1, **dadurch gekennzeichnet, dass** die Ausnehmung (10) in der Stirnseite (13) des Scharnierzapfens (1) als zentrale koaxiale Bohrung gebildet wird.

9. Verfahren nach Anspruch 7 oder 8, **dadurch gekennzeichnet, dass** das vieleckige Außenprofil (7) des Endabschnitts (3) des Scharnierzapfens (1) als Vielzahnprofil (7a) ausgebildet wird, das entweder mit einem entsprechend vielzähnigen Innenprofil der Öffnung (9) oder mit einer glattflächigen Wandung der Öffnung (9) in Eingriff gebracht wird.

10. Verfahren nach Anspruch 9, **dadurch gekennzeichnet, dass** der vielzähnige Endabschnitt (3) des Scharnierzapfens (1) mindestens an der Profiloberfläche mit einem höheren Härtegrad und mit einem größeren Durchmesser als die Wandung der Öffnung (9) versehen wird, so dass beim Eintreiben des Endabschnitts (3) des Scharnierzapfens (1) in die Öffnung (3) ein Formschluss gebildet wird, bei dem das vielzähnige Profil des Endabschnitts (3) des Scharnierzapfens (1) in das Material der Wandung der Öffnung (9) gedrückt wird.

11. Verfahren nach Anspruch 9 oder 10, **dadurch gekennzeichnet, dass** der Endabschnitt (3) des Scharnierzapfens (1) mindestens an der vielzähnigen Oberfläche gehärtet wird.

12. Formwerkzeug zur Verwendung bei der Durchführung des Verfahrens gemäß einem oder mehreren der Ansprüche 7-11, **dadurch gekennzeichnet, dass** am Ende eines Schaftes (18) ein vorstehender Stempel (16) ausgebildet ist, dessen Wandung (19) in eine den Stempel (16) umgebende kreisringförmige Nut (17) übergeht.

13. Formwerkzeug nach Anspruch 12, **dadurch gekennzeichnet, dass** die Nut (17) im Querschnitt bogenförmig verläuft.

14. Formwerkzeug nach Anspruch 12 oder 13, **dadurch gekennzeichnet, dass** der Stempel (16) einen im wesentlichen stumpfkegeligen Querschnitt aufweist und konzentrisch an dem Schaft (18) angeordnet ist.
